## Europäisches Patentamt
## European Patent Office
## Office européen des brevets

(11) Numéro de publication : **0 064 921**
**B1**

# FASCICULE DE BREVET EUROPÉEN

(45) Date de publication du fascicule du brevet :
30.01.85

(51) Int. Cl.⁴ : **G 21 C 15/12, G 21 C 1/02**

(21) Numéro de dépôt : **82400791.8**

(22) Date de dépôt : **30.04.82**

(54) **Dispositif de refroidissement de la cuve principale d'un réacteur nucléaire à neutrons rapides.**

(30) Priorité : 30.04.81 FR 8108638

(43) Date de publication de la demande :
17.11.82 Bulletin 82/46

(45) Mention de la délivrance du brevet :
30.01.85 Bulletin 85/05

(84) Etats contractants désignés :
BE DE GB IT NL

(56) Documents cités :
FR-A- 2 291 580
FR-A- 2 333 328
FR-A- 2 347 749
FR-A- 2 461 335
GB-A- 2 000 356
US-A- 4 056 438

(73) Titulaire : **NOVATOME**
**20 Avenue Edouard Herriot**
**F-92350 Le Plessis Robinson (FR)**

(72) Inventeur : **Debru, Michel**
**3 Square Jean Boin**
**F-91300 Massy (FR)**

(74) Mandataire : **Bouget, Lucien et al**
**CREUSOT-LOIRE 15 rue Pasquier**
**F-75383 Paris Cedex 08 (FR)**

Jouve, 18, rue St-Denis, 75001 Paris, France

## Description

L'invention concerne un réacteur nucléaire à neutrons rapides de type intégré comportant une cuve à symétrie de révolution autour d'un axe vertical appelée « cuve principale ».

Dans ce type de réacteur, la cuve principale contient un liquide de refroidissement à l'intérieur duquel est immergé le cœur du réacteur constitué par des assemblages combustibles juxtaposés et dégageant de la chaleur produite par fission qui est cédée au liquide de refroidissement remplissant la cuve, généralement du sodium liquide.

La cuve est fermée à sa partie supérieure par une dalle de forte épaisseur qui est elle-même supportée par le caisson en béton du réacteur. La cuve principale est généralement fixée sur la dalle, si bien que l'ensemble de la cuve, des composants et du sodium qu'elle contient est suspendu à la dalle par l'intermédiaire de la partie supérieure de la cuve qui subit ainsi des contraintes importantes.

Il est donc nécessaire d'éviter que la température de la cuve principale, en contact avec le sodium liquide, soit portée à une température élevée ou subisse des variations de température, pendant le fonctionnement du réacteur.

D'autre part, une cloison à symétrie de révolution, généralement double, sépare le volume intérieur de la cuve principale en deux zones dont l'une contient le cœur du réacteur. Dans cette zone, le sodium liquide traversant le cœur de bas en haut ressort du cœur à une température de l'ordre de 560 °C, alors que le sodium pénètre dans le cœur, à la partie inférieure de celui-ci, à une température de l'ordre de 400 °C.

Pour cette raison, le sodium sortant du cœur et remplissant la première zone de la cuve principale est appelé « sodium chaud » alors que le sodium entrant dans le cœur du réacteur est appelé « sodium froid ».

Un ensemble d'échangeurs de chaleur appelés « échangeurs intermédiaires » est d'autre part disposé à l'intérieur de la cuve principale, de façon que l'entrée de fluide primaire dans ces échangeurs soit disposée à l'intérieur de la première zone contenant le sodium chaud et que la sortie de fluide primaire débouche dans la seconde zone ménagée dans la cuve principale par une cloison de séparation. A l'intérieur de l'échangeur intermédiaire, le sodium remplissant la cuve appelé « sodium primaire » échauffe du sodium appelé « sodium secondaire » qui est envoyé à des générateurs de vapeur dans lesquels il produit la vaporisation de l'eau d'alimentation. Le sodium primaire venant de la première zone s'est refroidi en échauffant le sodium secondaire, si bien que la seconde zone de la cuve principale reçoit du sodium froid qui est envoyé à partir de cette zone, grâce à un ensemble de pompes immergées dans la cuve, à la partie inférieure du cœur du réacteur, sous les assemblages, grâce aux tuyauteries de sortie des pompes qui sont en communication avec cette partie du cœur.

Pour assurer le refroidissement et le maintien à température constante de la cuve principale, on provoque d'autre part une circulation de sodium froid en contact avec la surface intérieure de celle-ci, au moins dans sa partie supérieure. Pour cela, on dispose au moins deux viroles cylindriques à l'intérieur de la cuve et coaxialement à celle-ci.

La virole de plus grand diamètre, ou virole externe, ménage entre sa surface externe et la surface intérieure de la cuve principale un espace annulaire qui est mis en communication avec la partie inférieure du cœur c'est-à-dire la zone où est injecté le sodium froid.

Les deux viroles ménagent entre elles un second espace annulaire qui est mis en communication avec la seconde zone ménagée dans la cuve renfermant le sodium froid. Ces deux espaces annulaires débouchent à leur partie supérieure dans une zone comprise entre la dalle et le niveau supérieur de sodium dans la cuve qui est rempli par une couverture de gaz 'nerte protégeant la dalle.

Une partie du sodium froid injecté par les pompes est envoyée dans le passage annulaire externe et circule dans celui-ci de bas en haut en contact avec la surface interne de la cuve principale qu'il refroidit et maintient à la température du sodium froid. A la partie supérieure de l'espace externe, le sodium s'écoule dans le second espace annulaire pour redescendre par gravité dans la seconde zone de la cuve renfermant le sodium froid.

On a imaginé divers perfectionnements à ce dispositif de refroidissement par circulation de sodium froid mais dans tous les cas la virole externe subit sur sa surface externe la pression du sodium liquide à sa partie supérieure où cette pression n'est pas équilibrée par la pression du sodium contenu dans le second espace annulaire, à cause de la différence de niveau du sodium dans ces deux espaces, permettant son écoulement d'un espace vers l'autre.

De la même façon, la partie inférieure de la virole subit une pression différentielle due à la différence de hauteur des colonnes de sodium dans les deux espaces annulaires.

Il est donc nécessaire de prévoir des viroles résistantes et donc d'une épaisseur importante. Le poids de l'ensemble supporté par la cuve principale en est augmenté d'autant. Un tel réacteur nucléaire à neutrons rapides est déjà connu, par exemple, du brevet FR-A-2 333 328.

Le but de l'invention est donc de proposer un réacteur nucléaire à neutrons rapides, de type intégré, comportant une cuve à symétrie de révolution autour d'un axe vertical, appelée « cuve principale », renfermant un liquide de refroidissement et à l'intérieur de laquelle sont disposés le cœur du réacteur, une pluralité de pompes pour la mise en circulation du liquide de refroidissement et une pluralité d'échangeurs de chaleur utilisant comme fluide primaire le liquide de refroidissement, une cloison à symétrie de révolution autour de l'axe de la cuve disposée à une certaine hauteur dans la cuve et à la périphérie du cœur ménageant dans cette cuve deux zones distinctes dont l'une contient le cœur et le sodium échauffé au contact de ce cœur qui sort de cette première zone par l'entrée de fluide primaire des échangeurs de chaleur dont la sortie de fluide primaire se trouve dans la seconde zone contenant du liquide refroidi par les échangeurs de chaleur qui est entraîné par les pompes et injecté à la partie inférieure du cœur, et au moins deux viroles coaxiales par rapport à la cuve principale et disposées à l'intérieur de celle-ci sur une certaine hauteur, au-dessus de la cloison et ménageant entre elles et entre la virole de plus grand diamètre ou virole externe et la cuve, au moins deux espaces annulaires pour le passage du liquide de refroidissement débouchant l'un à la partie inférieure du cœur et l'autre dans la seconde zone, ces deux espaces annulaires étant d'autre part en communication, à leur partie supérieure avec une zone située à la partie supérieure de la cuve et remplie par du gaz inerte de couverture, ce dispositif de refroidissement devant permettre d'utiliser des viroles de résistance mécanique moindre et donc d'épaisseur moindre, pour délimiter les espaces de circulation du sodium froid et conduire ainsi à un gain de poids sur l'ensemble des composants disposés à l'intérieur de la cuve.

Dans ce but, l'espace annulaire limité par la cuve principale et la virole externe, ou espace externe, est en communication avec la seconde zone contenant du liquide refroidi et l'espace interne limité par les deux viroles entre elles est en communication, par l'intermédiaire d'au moins un conduit, avec la partie inférieure du cœur où est injecté le liquide froid dont une partie est ainsi amenée à circuler de bas en haut dans le second espace, avant de s'écouler dans l'espace externe, au niveau de la zone supérieure de la cuve occupée par la couverture gazeuse et de redescendre par gravité jusqu'à la partie inférieure du cœur en restant en contact avec la surface intérieure de la cuve principale, assurant ainsi le refroidissement de cette cuve.

On va maintenant décrire à titre d'exemples non limitatifs, en se référant aux figures jointes en annexe, deux modes de réalisation d'un dispositif de refroidissement suivant l'invention par comparaison avec un dispositif de refroidissement suivant l'art antérieur.

La figure 1 représente, dans une demi-vue en coupe par un plan de symétrie vertical, la cuve d'un réacteur nucléaire à neutrons rapides de type intégré, comportant un dispositif de refroidissement de la cuve principale suivant l'art antérieur.

La figure 2 représente une demi-vue en coupe par un plan vertical de symétrie d'une cuve de réacteur nucléaire à neutrons rapides comportant un dispositif de refroidissement de la cuve principale suivant un premier mode de réalisation de l'invention.

La figure 3 représente dans une demi-vue en coupe par un plan de symétrie, une cuve d'un réacteur nucléaire à neutrons rapides, munie d'un dispositif de refroidissement de la cuve principale suivant l'invention, selon un second mode de réalisation.

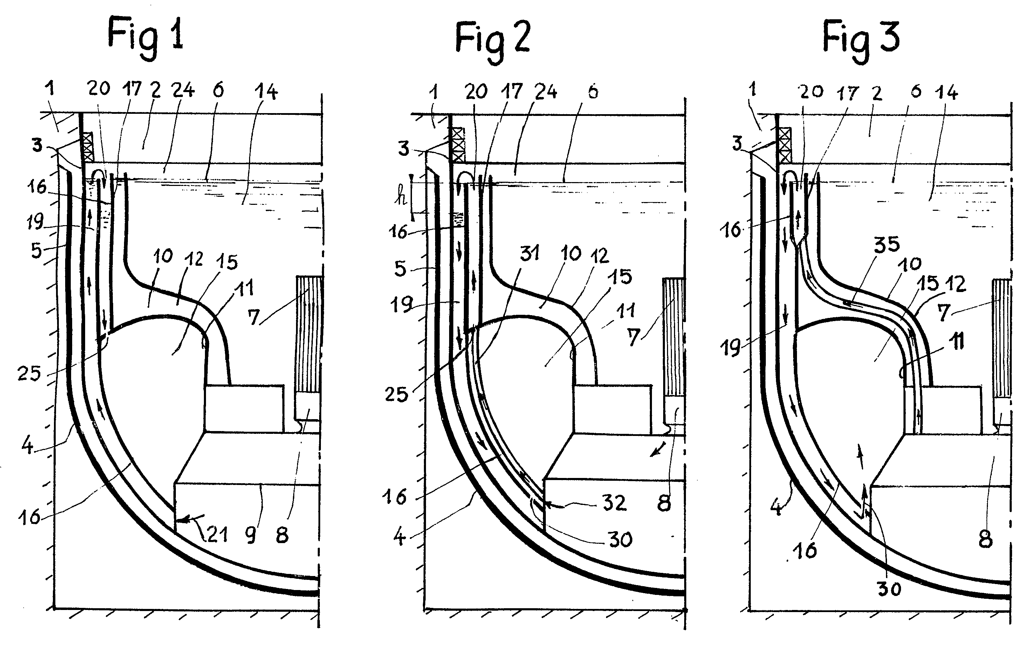

Sur la figure 1, on voit le caisson 1 d'un réacteur nucléaire à neutrons rapides sur lequel est fixée la dalle 2 recouvrant la cuve du réacteur.

La cuve principale 3 est fixée sur la dalle à sa partie supérieure cependant que la cuve de sécurité 4 recouverte d'une couche de matière isolante 5 est fixée sur le caisson 1.

La cuve principale 3 contient du sodium liquide jusqu'au niveau 6 dans lequel plonge le cœur 7 du réacteur reposant sur un sommier 8 et un platelage 9 reposant lui-même sur le fond de la cuve principale 3. Le volume interne de la cuve principale 3 est séparé en deux zones distinctes par une double cloison 10 en appui sur le platelage 9 à la périphérie du cœur et constituée par une paroi torique 11 et une paroi cylindroconique 12. Cette double cloison, encore appelée redan, permet d'isoler le sodium contenu dans la zone supérieure 14 renfermant le cœur 7, du sodium contenu dans la zone inférieure torique 15.

Des échangeurs de chaleur intermédiaires et des pompes non représentés permettent d'une part le refroidissement du sodium chaud contenu dans la zone 14 au contact du sodium secondaire, le passage de ce sodium de la zone 14 à la zone 15 et enfin l'injection du sodium froid prélevé dans la zone 15 à la partie inférieure du cœur, dans le sommier 8.

Le sodium froid réinjecté à la base du cœur traverse celui-ci de bas en haut, se réchauffe puis passe de la zone 14 à la zone 15 par les échangeurs intermédiaires.

En plus du redan, sont disposées dans la cuve et coaxialement à celle-ci une virole externe 16 et une virole interne 17 dont les parties situées au-dessus de la zone 15 limitent entre elles et entre la virole externe et la cuve principale 3 deux espaces annulaires 19 et 20 dans lesquels circule le sodium froid.

Pour permettre cette circulation de sodium froid, la virole 16 est prolongée de façon à mettre en communication l'espace 19 avec la base du cœur, sous le sommier 8, à l'endroit où l'injection de sodium froid est effectuée.

Ainsi qu'il est montré par les flèches 21, une circulation de sodium froid s'établit de bas en haut dans l'espace annulaire 19 ménagé entre la virole externe 16 et la cuve principale 3.

A la partie supérieure du passage annulaire 19 qui débouche sous la dalle 2 dans l'espace 24 ménagé entre la dalle et le niveau 6 du sodium liquide et rempli par un gaz inerte, par exemple de l'argon, le sodium liquide froid s'écoule le long de la virole 16 à l'intérieur de l'espace annulaire 20, ce sodium redescendant par gravité dans la partie 15 de la cuve contenant le sodium froid.

Le passage annulaire 20 est mis en communication avec la zone 15 contenant le sodium froid par l'intermédiaire d'un orifice calibré 25 permettant de régler la perte de charge lors de la circulation du sodium.

La circulation du sodium froid en contact avec la paroi interne de la cuve principale 3 permet de refroidir celle-ci et de la maintenir à une température pratiquement constante et correspondant à la température du sodium avant son entrée dans le cœur.

Le pompage du sodium liquide et les pertes de charge lors de sa circulation permettent de maintenir une différence de niveau entre le sodium remplissant le conduit 19 et le sodium s'écoulant dans le conduit 20.

Sur la figure 2 on a représenté les éléments correspondant à ceux représentés sur la figure 1 affectés des mêmes repères.

A la différence du mode de réalisation du dispositif de refroidissement représenté à la figure 1 et correspondant à l'art antérieur, l'espace annulaire 19 est mis en communication par un ensemble d'ouvertures calibrées 30 permettant d'assurer une perte de charge réglée lors de la circulation du sodium, avec la zone annulaire 15 renfermant le sodium froid, alors que l'espace annulaire 20 est mis en communication par l'intermédiaire de conduits 31 avec la zone de la cuve disposée en dessous du sommier 8 où est injecté le sodium froid.

De cette façon, la circulation du sodium froid se fait suivant la direction et le sens indiqués par les flèches 32. Le sodium froid circule donc d'abord à l'intérieur des conduits 31 par lesquels il parvient dans l'espace annulaire 20 qu'il parcourt de bas en haut jusqu'au niveau de l'espace compris entre la dalle et le niveau 6 du sodium liquide où se situe l'extrémité supérieure de la virole externe 16.

Le sodium froid s'écoule alors par gravité dans l'espace annulaire 19 le long de la surface externe de la virole 16.

Une différence de niveau du sodium dans les espaces annulaires 20 et 19 respectivement est maintenue comme précédemment grâce au pompage et par les pertes de charge en particulier au niveau des ouvertures 30.

Dans l'espace annulaire externe 19, le sodium s'écoule vers le bas par gravité, en contact avec la surface intérieure de la cuve principale 3, qu'il refroidit et maintient à la température du sodium froid c'est-à-dire vers 400 °C. Le retour du sodium froid dans la zone 15 se fait par l'intermédiaire des ouvertures calibrées 30.

On voit que par rapport au dispositif selon l'art antérieur représenté sur la figure 1, le dispositif suivant l'invention a l'avantage de mettre la virole externe 16 sous pression interne alors que cette virole est sous pression externe dans le dispositif de l'art antérieur. De même, la partie inférieure du baffle qui prolonge la virole 16 jusqu'au niveau du sommier 8 n'est plus soumise qu'à une pression différentielle interne de faible amplitude.

De cette façon on peut réduire l'épaisseur de la virole 16 et ainsi obtenir un gain de poids substantiel lors de la conception du réacteur.

La différence de niveau h entre le sodium remplissant l'espace annulaire 20 et le sodium en écoulement dans l'espace annulaire 19 est de l'ordre de deux mètres pour les réacteurs nucléaires construits actuellement, dont la cuve a un diamètre de l'ordre de vingt mètres.

La partie de la cuve principale 3 disposée sur cette hauteur h, entre le niveau du sodium dans l'espace 20 et le niveau du sodium dans l'espace 19, n'est pas en contact avec le sodium comme dans le cas du dispositif de l'art antérieur.

Cependant, ceci n'entraîne pas de fortes différences de température entre les points de la cuve en contact avec ce sodium et les points de la cuve en contact avec le gaz surmontant le sodium car, d'une part la cuve de sécurité 4 est calorifugée, ce qui évite les déperditions thermiques de la cuve principale, et d'autre part l'apport calorifique du rayonnement de la virole externe 16 au niveau de la zone de hauteur h maintient la cuve principale, dans cette zone, à une température proche de la température du reste de la cuve.

Sur la figure 3 on a représenté un second mode de réalisation du dispositif de refroidissement suivant l'invention, où la virole 17 est d'une hauteur réduite et où l'espace 20 est en communication par sa partie inférieure avec la partie inférieure du cœur par l'intermédiaire de conduits tels que 35 passant dans l'espace central de la cloison 10 disposé entre les deux parties de la cloison constituant le redan.

L'espace annulaire 19 communique, comme pour le dispositif représenté à la figure 2 avec la zone 15 renfermant le sodium froid par des orifices calibrés tels que 30.

Le fonctionnement du dispositif est pratiquement identique au fonctionnement du dispositif représenté à la figure 2, une petite partie du sodium froid injecté sous le sommier 8 passant dans le conduit 35 et de là, dans l'espace annulaire 20 constituant un déversoir pour l'écoulement du sodium dans l'espace annulaire 19, pour le refroidissement de la cuve principale 3 et le retour du sodium dans la zone torique par les ouvertures 30.

Ce dispositif présente les mêmes avantages que le dispositif représenté à la figure 2.

L'invention ne se limite pas aux modes de réalisation qui ont été décrits ; c'est ainsi qu'on peut imaginer d'autres moyens pour relier l'espace annulaire 20 constituant un déversoir pour le sodium liquide avec la partie inférieure du cœur.

On peut également imaginer un mode de liaison quelconque entre l'espace 19 ménagé entre la cuve principale et la virole externe et la zone telle que 15 renfermant le sodium froid, pour le recyclage de celui-ci.

Le dispositif suivant l'invention peut s'appliquer quelles que soient la forme et la constitution du redan, que celui-ci soit constitué par une cloison simple ou par une cloison double.

Enfin, le dispositif suivant l'invention s'applique dans le cas de tous les réacteurs à neutrons rapides de type intégré.

## Revendications

1. Réacteur nucléaire à neutrons rapides de type intégré comportant une cuve (3) à symétrie de révolution autour d'un axe vertical appelée cuve principale renfermant un liquide de refroidissement et à l'intérieur de laquelle sont disposés le cœur (7) du réacteur, une pluralité de pompes pour la mise en circulation du liquide de refroidissement et une pluralité d'échangeurs de chaleur utilisant comme fluide primaire le liquide de refroidissement, une cloison (10), à symétrie de révolution autour de l'axe de la cuve disposée à une certaine hauteur dans la cuve (3) et à la périphérie du cœur (7) ménageant dans cette cuve des zones distinctes dont l'une (14) contient le cœur (7) et le sodium échauffé au contact de ce cœur qui sort de cette première zone par l'entrée de fluide primaire des échangeurs de chaleur dont la sortie de fluide primaire se trouve dans la seconde zone (15) contenant du liquide refroidi par les échangeurs de chaleur qui est entraîné par les pompes et injecté à la partie inférieure du cœur, et au moins deux viroles (16, 17) coaxiales par rapport à la cuve principale (3) et disposées à l'intérieur de celle-ci sur une certaine hauteur audessus de la cloison (10) et ménageant entre elles et entre la virole (16) de plus grand diamètre ou virole externe et la cuve (3) au moins deux espaces annulaires (19, 20) pour le passage du liquide de refroidissement débouchant l'un à la partie inférieure du cœur (7) et l'autre dans la seconde zone (15) ces deux espaces annulaires étant d'autre part en communication, à leur partie supérieure, avec une zone (24) située à la partie supérieure de la cuve et remplie par du gaz inerte de couverture caractérisé par le fait que l'espace annulaire (19) limité par la cuve principale (3) et la virole externe (16) ou espace externe, est en communication avec la seconde zone (15) contenant du liquide refroidi et que l'espace interne (20) limité par les deux viroles (16, 17) entre elles est en communication, par l'intermédiaire d'au moins un conduit (31, 35) avec la partie inférieure du cœur (7) où est injecté le liquide froid dont une partie est ainsi amenée à circuler de bas en haut dans le second espace (20), avant de s'écouler dans l'espace externe (19), au niveau de la zone supérieure (24) de la cuve occupée par la couverture gazeuse et de redescendre par gravité jusqu'à la partie inférieure du cœur en restant en contact avec la surface intérieure de la cuve principale (3) assurant ainsi le refroidissement de cette cuve.

2. Réacteur suivant la revendication 1, caractérisé par le fait que le ou les conduits (31) mettant en communication l'espace interne (20) limité par les deux viroles (16, 17) avec la partie inférieure du cœur (7) traversent la seconde zone (15) de la cuve renfermant le sodium liquide froid.

3. Réacteur suivant la revendication 1, dans lequel la cloison (10) séparant le volume interne de la cuve principale (3) en deux parties, ou redan, est constituée par deux parois (11, 12) entre lesquelles existe un espace libre, caractérisé par le fait que le ou les conduits (35) mettant en communication l'espace annulaire interne (20) ménagé entre les deux viroles (16, 17) et la partie inférieure du cœur (7) sont disposés à l'intérieur de l'espace libre ménagé entre les deux parties du redan (10).

## Claims

1. Fast neutron nuclear reactor of the integrated type incorporating a vessel (3) with symmetry of revolution around a vertical axis, called a main vessel, which contains a liquid coolant and inside which are arranged the reactor core (7), a plurality of pumps for circulating the liquid coolant and a plurality of heat exchangers employing the liquid coolant as a primary fluid, a partition (10), with symmetry of revolution around the axis of the vessel, arranged at a certain height in the vessel (3) and at the periphery of the core (7), providing in this vessel separate zones one (14) of which contains the core (7) and the sodium heated on contact with this core which leaves this first zone by the entry for the primary fluid of the heat exchangers in which the outlet for the primary fluid is in the second zone (15) containing liquid cooled by the heat exchangers which is drawn by the pumps and injected into the lower part of the core, and at least two cylindrical shells (16, 17) coaxial with the main vessel (3) and arranged inside the latter over a certain height above the partition (10) and providing between them and between the cylindrical shell (16) of greater diameter, or the outer shell, and the vessel (3) at least two annular spaces (19, 20) for the passage of the emergent liquid coolant, one in the lower part of the core (7) and the other in the second zone (15), these two annular spaces communicating, moreover, in their upper part, with a zone (24) situated in the upper part of the vessel and filled with an inert blanketing gas, characterised in that the annular space (19) bounded by the main vessel (3) and the outer cylindrical shell (16), or outer space, communicates with the second zone (15) containing the cooled liquid and the inner space (20) bounded by each of the two cylindrical shells (16, 17) communicates, through the intermediacy of at least one conduit (31, 35), with the lower part of the core (7) where the cold liquid is injected, a part thereof being thus caused to circulate upwards in the second space (20) before being discharged into the outer space (19) in the region of the upper zone (24) of the vessel, which is occupied by the gas blanket and before flowing down again under the effect of gravity into the lower part of the core while remaining in contact with the inner surface of the main vessel (3), thus providing the cooling of this vessel.

2. Reactor according to Claim 1, characterised in that the conduit or conduits (31) by which the inner space (20) bounded by the two cylindrical shells (16, 17) communicates with the lower part of the core (7) crosses, or cross, the second zone (15) of the vessel containing the cold liquid sodium.

3. Reactor according to Claim 1, in which the partition (10) dividing the inner space of the main vessel (3) into two parts, or a step, is formed by two walls (11, 12) between which there is a free space, characterised in that the conduit or conduits (35) by which the inner annular space (20) provided between the two cylindrical shells (16, 17) communicates with the lower part of the core (7) is, or are, arranged inside the free space provided between the two parts of the step (10).

**Ansprüche**

1. Integrierter Schnellneutronenkernreaktor bestehend aus einem um eine senkrechte Achse drehsymmetrischen als Hauptbehälter bezeichneten Behälter (3) mit einer Kühlflüssigkeit in welchem der Reaktorkern (7), mehrere Pumpen zum Umlauf der Kühlflüssigkeit und mehrere Wärmetauscher untergebracht sind, die als Primärmedium die Kühlflüssigkeit benutzen, sowie eine um die Behälterachse drehsymmetrische, in einer bestimmten Höhe in dem Behälter (3) und an der Peripherie des Kerns (7) angeordnete Trennwand (10), die somit den Behälterinnenraum in bestimmte Zonen unterteilt, wobei die eine (14) den Kern (7) und das bei Kontakt mit dem Kern erhitzte Natrium aufnimmt, das aus dieser ersten Zone über den Primärmediumeinlauf der Wärmetauscher austritt — der Primärmediumaustritt befindet sich in der zweiten Zone (15), welche durch die Wärmetauscher gekühlte Flüssigkeit aufnimmt, das durch die Pumpen mitgenommen und am Kernunterteil eingespritzt wird — und mindestens zwei zum Hauptbehälter (3) koaxiale Mantelschüsse (16, 17), die in demselben in einer gewissen Höhe über der Trennwand (10) angeordnet sind und untereinander sowie zwischen dem Mantelschuss (16) mit dem grösseren Durchmesser oder Aussenmantelschuss und dem Behälter (3) mindestens zwei kreisförmige Räume (19, 20) für den Durchgang der Kühlflüssigkeit bilden, wobei der eine in den Unterteil des Kerns (7) und der andere in die zweite Zone (15) mündet, und diese beiden kreisförmigen Räume einerseits an ihren jeweiligen Oberteilen mit einer an dem Behälterunterteil liegenden, mit inertem Schutzgas gefüllten Zone (24) in Verbindung stehen, dadurch gekennzeichnet, dass der durch den Hauptbehälter (3) und den Aussenmantelschuss (16) begrenzte kreisförmige Raum (19) oder Aussenraum mit der zweiten gekühlte Flüssigkeit enthaltende Zone (15) in Verbindung steht, und dass der durch die beiden Mantelschüsse (16, 17) untereinander begrenzte Innenraum (20) über mindestens eine Leitung (31, 35) mit dem Unterteil des Kerns (7) in Verbindung steht, in den die kalte Flüssigkeit eingespritzt wird, wobei ein Teil davon in dem zweiten Raum (20) von unten nach oben somit zum Umlauf gebracht wird, bevor es in den Aussenraum (19) in die obere durch den Schutzgas gefüllte Zone (24) des Behälters mündet und wieder durch Schwerkraft bis in dem Kernunterteil nach unten fliesst, in dem es mit der Innenfläche des Hauptbehälters (3) in Kontakt bleibt um somit die Kühlung des Behälters zu gewährleisten.

2. Reaktor nach Anspruch 1, dadurch gekennzeichnet, dass die Leitung(en) (31), welche den durch die beiden Mantelschüsse (16, 17) begrenzten Innenraum (20) mit dem Unterteil des Kerns (7) verbinden, die zweite das kalte Flüssignatrium enthaltende Zone (15) des Behälters durchquert (durchqueren).

3. Reaktor nach Anspruch 1, in welchem die den Innenraum des Hauptbehälters (3) in zwei Teile trennende Trennwand (10) oder Vorsprung aus zwei Wänden (11, 12) besteht, die einen freien Raum begrenzen, dadurch gekennzeichnet, dass die Leitung oder Leitungen (35), welche den zwischen den beiden Mantelschüsse (16, 17) gebildeten kreisförmigen Innenraum (20) mit dem Unterteil des Kerns (7) verbinden, innen in dem zwischen den beiden Teilen des Vorsprungs (10) gebildeten freien Raum angeordnet ist oder sind.

Fig 1

Fig 2

Fig 3